# EUROPEAN PATENT APPLICATION

(11) **EP 2 463 736 A2**
(43) Date of publication of application: **13.06.2012**
(21) Application number: 11354067.8
(22) Date of filing: 10.11.2011
(51) Int. Cl.: G05B 9/02, G05B 15/02

(54) **Device manager**

(30) Priority: 09.12.2010 IN MA37672010
(71) Applicant: Schneider Electric Industries SAS, 92500 Rueil-Malmaison (FR)
(72) Inventor: Vasamsetty, Veerendra, 38050 Grenoble Cedex 09 (FR); Thangamani, Arunvel, 38050 Grenoble Cedex 09 (FR)
(74) Representative: Tripodi, Paul

(57) **Abstract**

A solution system for energy management of electrical, electromechanical and electronic devices including distribution, monitoring, control and protection devices; for managing an energy distribution system in an energy management architecture which comprises a network thereto, said solution system comprising of an energy distribution system interface configured to couple said solution system with at least one portion of said energy distribution system. Electrical, electromechanical and electronic devices including distribution, monitoring, control and protection devices present in the network. User interface or master device coupled with the other devices in the network and configured to be operable by the user for controlling and managing the solution system. Network interface configured to couple said master device with the said network for transmitting outbound communications to the said network. Memory comprising a database to store profiles including IDs and specification of the master device and other device on the network. Communication Interface coupled with energy distribution system interface, network interface, core logic, master device and various other devices present in the network configured to communication between master device and various other devices present in the network including the electrical, electromechanical, electronic devices, memory, error logs. Core logic coupled with the user interface for system level configuration or root level configuration of said user interface. The solution system is enabled to identify whether the original device is missing or replaced by fake/competitor device, device of a false rating and to protect and maintain the integrity of the solution system.

## Description

Technical field: The present invention relates to solution system and method for energy management of electrical, electronic or electromechanical devices including distribution, monitoring, control and protection devices.

Background and prior art: In the world of complex electrical networks and connections it is desirable to have centralized control referred to as solution systems. However, as one moves towards this approach, one can face several innovation challenges at the solution integration front. One of the problems is how to ensure that the devices installed and networked during the time of commissioning are not replaced during maintenance with fake or duplicate devices or poor quality competitor devices. It is also desirous to ensure energy management in a scenario wherein FD devices such as electrical, electronic or electromechanical devices including distribution, monitoring, control and protection devices such as circuit breakers, contactors, relays, transfer switches, panel boards along with metering and wiring devices play a vital role for efficient and safe energy. Every device needs to be at its desired quality level throughout the life time of the solution offered, in order to ensure efficient energy distribution and safe electricity to the customers. There are possibilities wherein after the installation, during operation:
1. One or more FD devices (e.g circuit breakers [MCB/MCCB/ACB]) being replaced with a fake device.
2. One or more FD Devices during overhauling being replaced with some poor quality competitor devices.
3. One or more FD devices being mistakenly replaced with devices of wrong current range. For example, if a 25A MCB is replaced by mistake with a 16A MCB during maintenance.

In all the cases above ensuring safe and efficient energy becomes difficult.

Some of the remotely related prior arts are mentioned below however it is clearly seen that they do not address the problems discussed earlier.

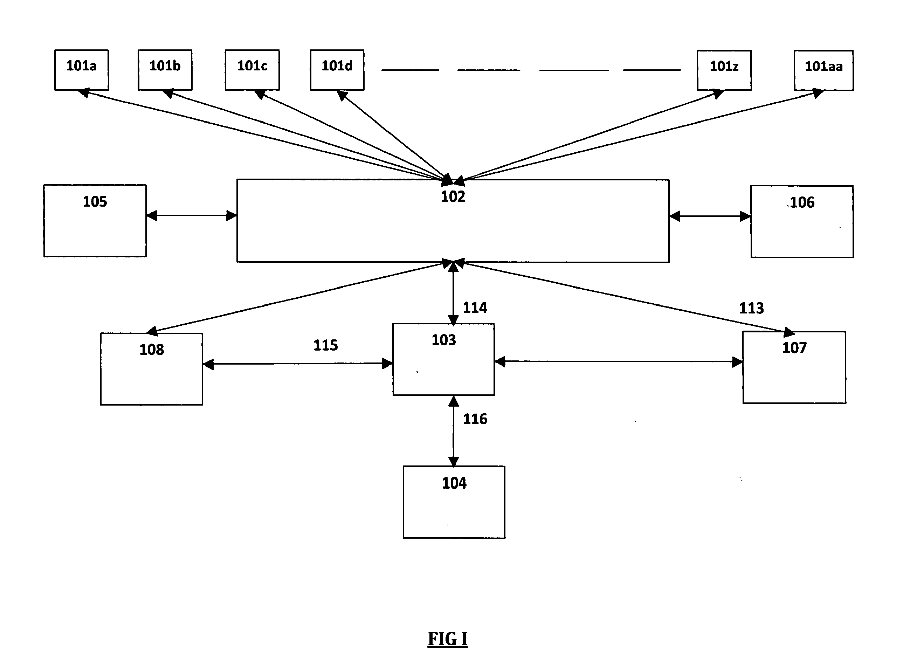

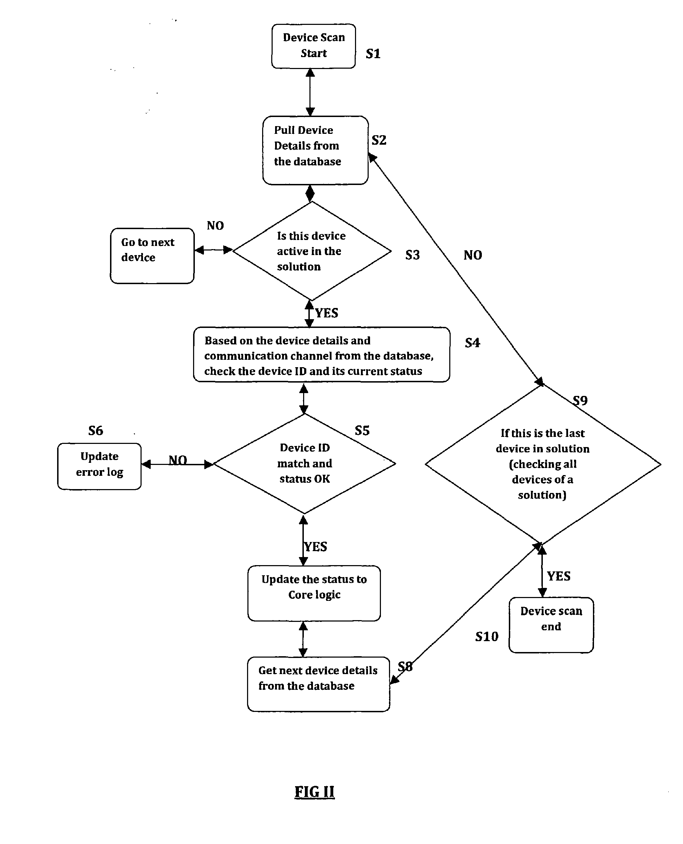

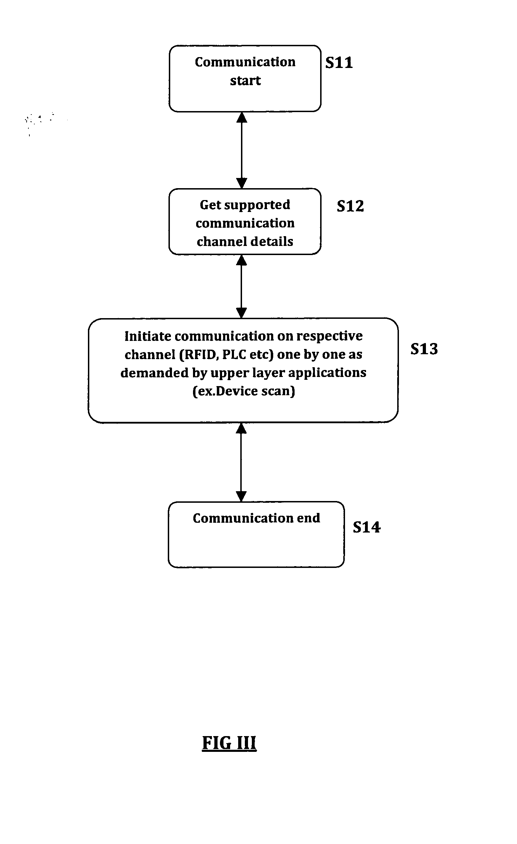

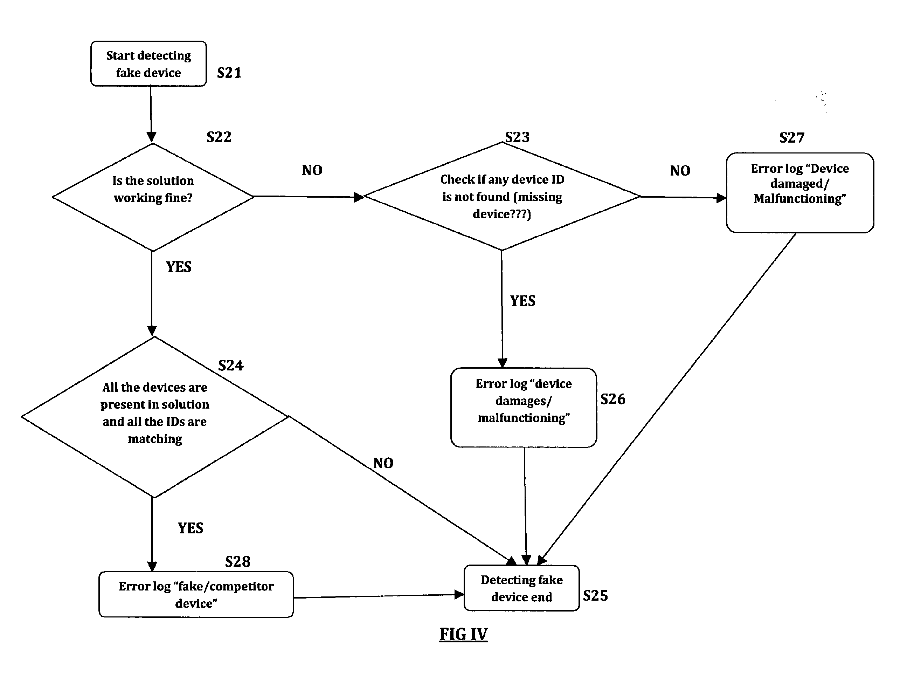

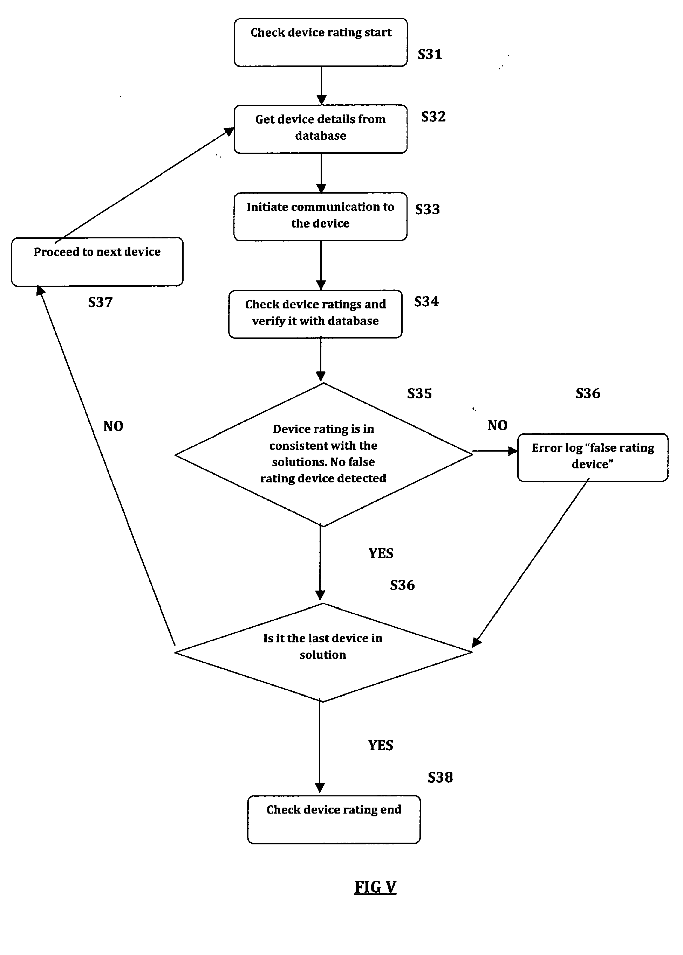

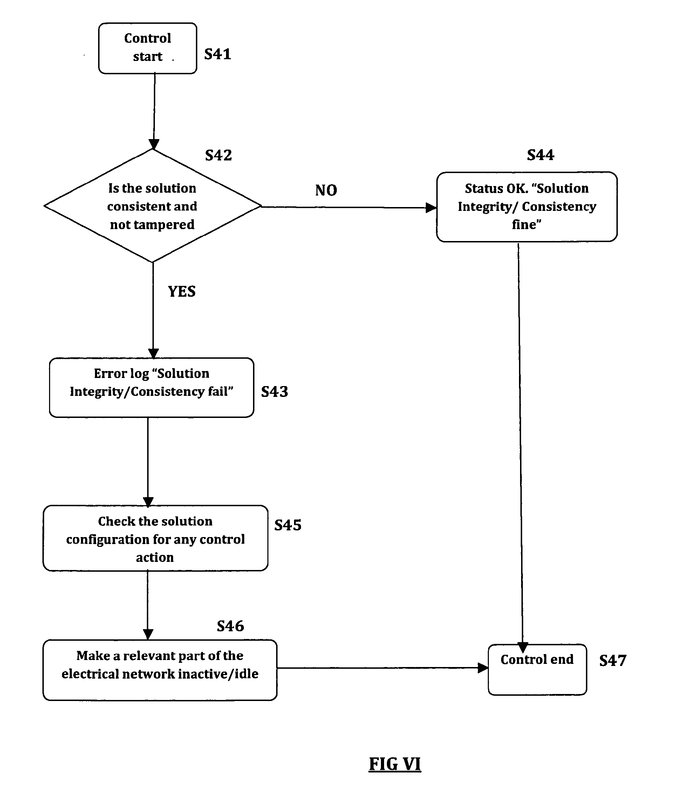

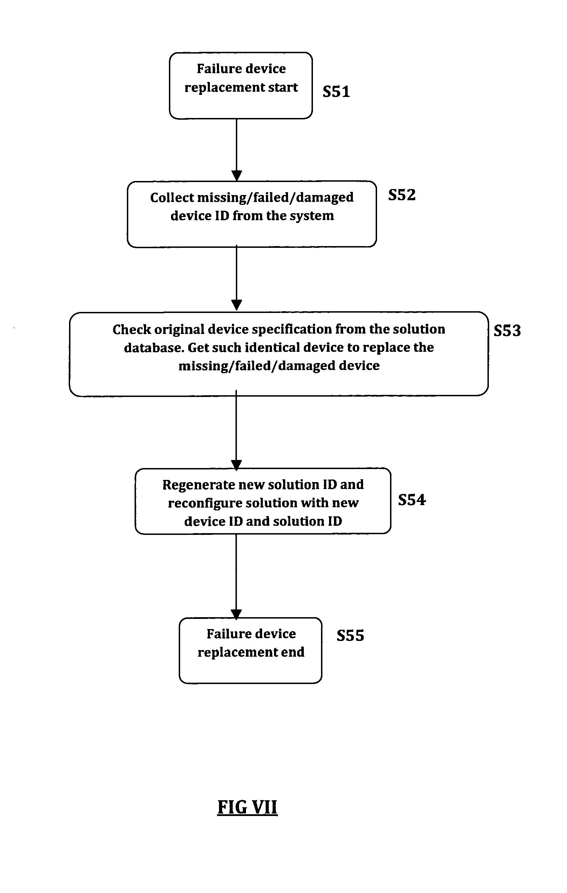

Prior arts JP2008102696 refers to a method for managing electrical installation devices and includes providing each electrical installation device with an IC tag recording identification information that enables specification of the devices; causing a variety of departments such as a manufacturing department, a device installation department and a device operation department to store the management information of the electrical installation devices in each department and the drawing information of the individual electrical installation devices in the IC or a storage medium different from the IC tag; causing each department to deliver the variety of information in the storage medium to the storage mediums of subsequent departments; or providing a storage medium that is shared by the departments and adding and storing the variety of information about the departments to the storage medium. The management information and the drawing information are readable from the IC tag and the storage medium. The time of management of the electrical installation devices and their components may be input to the storage medium and the IC tag.

EP2031625 describes a method involving sending and receiving data in a wireless manner, where the data is relevant for identifying a truck slot (3) or a truck module (2). The truck slot or the truck module is assigned a communication device (11, 12) to carry out an automatic identification of the truck slot or truck module.

Another prior art US 2010060418 in which there is described a remote control system for electrical and/ or electronic equipment and devices distributed in an environment, in particular in a domestic environment, comprising in combination:-at least one identification device(18) associated with an equipment or device (14), adapted to transmit an identification code (ID) assigned to an equipment or devices (14), for setting commands to a selected equipment or device (14) and a central management unit (12) for the system, the unit being arranged to control the equipments and devices (14) according to a set-up command, in which the remote control device (20) is adapted to query an identification device (18) in order to receive the identification code (ID) of a selected device (14) to be controlled, and is arranged to send out a complex command signal (CX) to the central management unit (18) over a second communication link (L2), which comprises:-the identification code (ID) of the equipment or device (14); and a command code (COM) indicating one of a plurality of predetermined universal commands that can be selected by means of a user interface of the control device (20), and in which the management unit (12) is adapted to generate an instruction specific to the equipment or device (14) that is recognized via the identification code (ID), on the basis of the received command code, according to a predetermined command interpretation criterion.

DE10059564 relates to an invention where electro-technical device connects to a communication network (SN) in the form of a power supply network and by its connection can be located and identified. The device is prompted to supply unique identifying information by receipt of an external prompt. The invention also relates to a corresponding method for locating and identifying a device in which a search request is sent of a specific device and the returning signal analyzed on a time of signal travel basis.

However, as already stated none of the above prior arts target the particular problem on hand which includes identification of fake or competitor device, identification of missing/stolen devices, identification of device having false rating, inactivation and isolation of that portion of electrical network containing the fake/competitor/missing/devices of false ratings, allowing the maintenance person to replace the incorrect device with the correct one. The above prior arts also do provide any answers on how to maintain the solution integrity of the system and to ensure tamper proof management of the solution of the system and the devices connected thereto. Consequently these documents do not provide any information on features and algorithms to address any of the above mentioned problems. Hence there is an imminent need for a remedy to the above problem and the same is provided by provided by the present invention. the remedy provided by the present invention not only ensures that the solution integrity and tamper-proof management of the solution system but also ensures customer satisfaction which is the desired end result for every invention.

Accordingly, it is the object of the present invention to provide for a solution system and method to continuously check the consistency or integrity of the solution and to ensure reliable electrical performance.

It is another object of the present invention to provide for a solution system and method for continuously checking and identifying the devices connected to the network thereto thereby preventing solution tampering.

It is yet another object of the invention to provide for a solution system and method for identifying fake/competitor devices, false rating devices, missing or stolen devices in the solution system.

It is yet a further object of the invention to provide for solution system and method to inactivate/idle one portion of the electrical network based on querying.

Summary of the invention: The present invention relates to a solution system and method for energy management of electrical, electromechanical and electronic devices including distribution, monitoring, control and protection devices for use in energy management architecture; comprising a network; for managing an energy distribution system. Specifically, the present invention provides for a solution system and method for continuously checking solution integrity, identify a false rating device, a fake/competitor device or a misplaced/stolen/damaged device in the network. The solution system of the present invention further includes configuration management features for identification of the devices connected to the network thereto and thereby maintaining solution integrity by preventing tampering of the connected devices.

### Brief description of the drawings: A full understanding of the invention can be gained from the

following description of the preferred embodiments when read in conjunction with the accompanying drawings in which:
FIG I shows a block diagram of the energy management architecture of the solution system of the present invention.
FIG II shows the flow chart of device identification and device activation.
FIG III shows the flow chart for communication to the user interface.
FIG IV shows the flow chart for detection of a fake device in the system.
FIG V shows the flow chart for verification of device rating.
FIG VI shows the flow chart for checking the solution integrity of the solution.
FIG VII shows the flow chart for replacing a failed/misplaced/damaged device with a new device.

### Detailed description of the preferred embodiment:

The solution system of the present invention represented schematically in **FIG I** includes a network which comprises of several devices **101,** each, for example, numbered as **101a, 101b, 101c, 101d....101z, 101aa** and so on and so forth connected to the communication interface module **102.** These devices comprise of electrical, electromechanical or electronic devices including distribution, monitoring, control and protection devices for example FD devices such as circuit breakers (MCB, MCCB, ACB, etc), contactors, relays, transfer switches, panel boards along with metering and wiring devices. Each device **101** carries a profile which contains its unique identification and specification details. These profiles are embedded into each device in various technologies such as PLC, RFID or any other known technology. The solution system further comprises of a user interface or a master device **104** herein referred to as the Master to which the other devices present in the network are connected thereto. The Master is configured to be operable by the user who controls and manages the solution system though the Master. In other words, the user installs, detects, identifies, controls, uninstalls and performs such other maintenance work on the other devices present in the solution system through the Master. The user comprises of alarms, indicators, and such other means for indicating a faulty, missing or otherwise a non-functional area of the solution system.

The communication interface module may be connected to an energy distribution system interface **105** via channel **111.** The energy distribution interface **105** is configured to couple said solution system with at least one portion of said energy distribution system. It is operable to implement the device **101** functionally such as metering, measuring power, power, monitoring power quality of the device **101.** The communication interface **102** is further connected to a network interface **106** via channel **112,** a memory **107** via channel **113.** The communication interface **102** is configured to support various channels and protocols which enable communication between said interface and various devices connected thereto. The protocols include but not limited to technologies such as Power Line Communication Module (PLC), Radio Frequency Identification (RFID) technology. RFID is a technology that incorporates the use of electromagnetic or electrostatic coupling in the radio frequency portion of the electromagnetic spectrum to uniquely identify an object, animal or person. However, any other suitable communication protocol may be used. The communication interface **102** is connected to the core logic **103** via channel **114.** The network interface **106** connects the master device **104** with the network via channel **116** for transmitting the outbound communications to the network The memory **107** contains a database comprising specifications and IDs of every device **(101a...101aa...)** as well as the network ID and specification. The core logic **103** is also connected to error log **108** via channel **115** which stores and provides the details of errors generated when the solution integrity is not maintained. Core logic is configured for system level configuration or the root level configuration. Once this user configuration is done, then this module is responsible for co-ordination of and configures all the logical subsystems such as scanning module, communication modules/protocols, task scheduler, HMI module, Alarms module etc.

The present invention further relates to a method for protecting the solution integrity by continuously detecting tampering of the devices of the system. The method includes:
A. Following the standard solution architecture method.
B. Deriving the solution profile which contains profiles of all devices connected to the network of the system.
C. Loading and installing the solution profile in the master device of the solution i.e. Master.
D. Once the solution is installed and running, the master device reads the on-device profiles of all the devices on the network using RFID, PLC or such other suitable technologies to read the device profiles.
E. Master device scans each profile and compares it with the pre-loaded profile data in the solution profile.
F. Comparison results will be positive as long as all the device profiles match the pre-loaded profile data, in which case, Master assumes that all the devices are intact and the solution integrity is maintained.
G. Comparison results will be negative if any one of the devices:
   (a) Is replaced by a fake/competitor device.
   (b) Is replaced by a device of false rating
   (c) A device is failed/missing or damaged.
H. The Master indicates the status by way of alarms, indicator, or any other suitable display method.
I. Operator/user can read details by connecting the Master on its network interface. Method steps A-F are further explained with the help of flow charts shown in **FIG II** and **III.** Identification of the devices **(101a...101aa...)** takes place according to step 1 **(S1)** of flow chart of **FIG II** where the user starts the device scan which activates core logic **103** to pull device details and specifications from the database on the memory **107 (S2).** If the device is active in the solution system, then based on the device details, it detects the device ID and checks for its current status **(S4).** If the device ID is a match and the device status shows as active, then the status is updated to the core logic **103 (S7).** In this case, no error is uploaded in the error log **108 (S6).** In case, an error is uploaded on the error log, the user can read the details by connecting the master device to the network interface. Similarly the user checks the status for the next device and so on and so forth until the device scan ends **(S10).** The device details and updates are sent to the core logic **103** via the communication interface **102. FIG III** shows the flow chart for communication between various communication channels and the communication interface **102.** The communication channel **113** transmits device IDs and specification details from memory **107** to interface **102.**

**FIG IV** further explain method step **G(a)** in which if the original device is replaced by a fake/competitor device. The user starts to scan for fake/competitor device in **S21** and if all device profiles match the solution profile, then the fake/competitor device scan ends in **S25.** However, if the device profile does not match with solution profile, then an error log is raised in **S28** and the fake/competitor device is identified.

Checking for devices of incorrect ratings is represented through flow chart of **FIG V.** The user initiates checking of device rating comparing it to the preloaded solution profile in **S34.** If the device rating is found to be consistent with the data stored in the solution, then the user proceeds to the next device in **S36** and so on and so forth till the checking of device ratings ends on a positive note. However, if the device rating does not match with the solution profile, then an error is raised in the error log **108** and the device is identified.

Each time a negative comparative result is found due to fake/competitor device or due to device or incorrect rating it is implied that the solution is tampered with. In which case, it is necessary isolate or inactivates that part of the network comprising the inconsistent device so that the incorrect device can be replaced or if the device is missing, then a new device can be installed. Therefore, the user starts scanning the system, identifies and inactivates part of the electrical network according to steps **S41** to **S47** of **FIG VI.**

In order to replace an inconsistent device or a missing device, the user collects and checks the device profile from the solution profile in **S52** and **S53** of **FIG VII** and replaces with a device of an identical specification. A new device ID is then regenerated and the solution is reconfigured to the new device ID as seen in **S54.**

It is to be noted that the invention is explained above with the help of an exemplary embodiment which is presented for the purpose of illustration and description in order to explain the various principles of the invention and their practical application. This is not intended to exhaust or limit the invention to a precise form that is disclosed and obviously many modifications and variations are possible in the light of the above teachings.

## Claims

1. A solution system for energy management of electrical, electromechanical and electronic devices including distribution, monitoring, control and protection devices; for managing an energy distribution system in an energy management architecture which comprises a network thereto, said solution system comprising of:
a. An energy distribution system interface configured to couple said solution system with at least one portion of said energy distribution system;
b. Electrical, electromechanical and electronic devices including distribution, monitoring, control and protection devices present in the network.
c. User interface or master device coupled with the other devices in the network and configured to be operable by the user for controlling and managing the solution system.
d. Network interface configured to couple said master device with the said network for transmitting outbound communications to the said network
e. Memory comprising a database to store profiles including IDs and specification of the master device and other device on the network.
f. Communication Interface coupled with energy distribution system interface, network interface, core logic, master device and various other devices present in the network configured to communication between master device and various other devices present in the network including the electrical, electromechanical, electronic devices, memory, error logs.
g. Core logic coupled with the user interface for system level configuration or root level configuration of said user interface;
Wherein the said solution system is enabled to identify whether the original device is missing or replaced by fake/competitor device, device of a false rating and to protect and maintain the integrity of the solution system.

2. A solution system as claimed in claim 1, wherein the energy distribution interface is operable to implement the device functionally such as metering, measuring power, monitoring power quality of the device.

3. A solution system as claimed in claim 1, wherein said communication interface is configured to support various protocols and channels operable to enable communication between the interface and various devices connected thereto.

4. A solution system as claimed in claim 1, wherein said each of electrical, electromechanical and electronic devices carry a profile comprising the identification and specification details, said profile being embedded in said device.

5. A solution system as claimed in claim 1, wherein the user interface further comprises of alarms, indicators, and such other display methods for indicating a faulty, missing or otherwise a non-functional area of the solution system.

6. A method for protecting integrity of solution system by continuously checking and detecting tampering of the various devices of the system, said method including:
A. Installing the devices in a standard solution architecture method; and
B. Deriving the solution profile which contains the profiles of all devices connected to the network of the system; and
C. Loading and installing the solution profile in the master device of the solution; and
D. After installing, the master device reads on-device profiles of all the devices on the network using suitable technologies to read the device profiles; and
E. Master device scans each profile and compares it with the pre-loaded profile data in the solution profile; and
F. Comparison results, being positive indicates that solution integrity is maintained; or
G. Comparison results being negative indicates
a. Original device is replaced by fake/competitor device or
b. Original device being replaced with a device of a false rating or
c. Original device missing/stolen or damaged; and
H. Master device indicates the status on the user interface by way of alarms, indicator or such other suitable display methods; and
I. User/operator can read details by connecting the master device on its network interface.

7. A method for protecting integrity of the solution system as claimed in claim 6, wherein if the comparison results are negative, then the details are updated in the error log which the user can access by connecting the master device on its network interface.

8. A method as claimed in claim 6, wherein if the comparison results are negative, the user checks for fake/competitor device by scanning all the devices in the network and comparing the on-device profiles with the preloaded solution profiles, if said comparison being negative, an error being reported in the error log and the fake/competitor device being identified.

9. A method as claimed in claim 6, wherein if the comparison results are negative, the user checks for devices of faulty, missing or otherwise inconsistent device by scanning all the devices in the network and comparing the on-device profiles with the preloaded solution profiles, if said comparison being negative, an error being reported in the error log and the faulty, missing or inconsistent device being identified.

10. A method for maintaining the integrity and ensuring tamper-proof management of the solution system by isolating the part of the network comprising faulty, missing or device of inconsistent rating of the solution system, said method comprising of:
A. Scanning the network to identify the part of the network comprising faulty, missing or device of inconsistent rating; and
B. If the comparison results are negative, then an error being reported in the error log, which error log made available to the user by connecting the master device to the network interface; and
C. Checking the solution configuration for any control action; and
D. Making that part of the electrical network inactive or idle thereby isolating said part of the network.

11. A method for replacing missing or faulty or device or inconsistent rating of the said solution system, said method comprising of:
A. Collecting the missing or faulty or an otherwise inconsistent device ID from the system.
B. Checking the specification of the said device from the solution database;
C. Using identical device for replacing the said device;
D. Regenerating solution ID and reconfiguring the solution profile with the profile of the new device thereby completing the said method.
